# EUROPEAN PATENT SPECIFICATION

(11) **EP 3 252 203 B1**
(45) Date of publication and mention of the grant of the patent: **21.04.2021**
(21) Application number: 15879604.5
(22) Date of filing: 03.07.2015
(51) Int. Cl.: D06F 37/20, D06F 37/22, D06F 39/08

(54) **INSTALLATION VIBRATION DAMPING DEVICE FOR TWO-HEAD DRAINAGE PUMP OF WASHING MACHINE**
INSTALLATIONSSCHWINGUNGSDÄMPFER FÜR ZWEIKÖPFIGE ABFLUSSPUMPE EINER WASCHMASCHINE
DISPOSITIF D'AMORTISSEMENT DE VIBRATIONS D'INSTALLATION DESTINÉ À UNE POMPE DE DRAINAGE À DEUX TÊTES D'UNE MACHINE À LAVER

(30) Priority: 27.01.2015 CN 201510040497
(43) Date of publication of application: 06.12.2017
(73) Proprietor: Qingdao Haier Washing Machine Co., Ltd., Shandong 266101 (CN)
(72) Inventor: XU, Sheng, Qingdao Shandong 266101 (CN); PENG, Xiuwen, Qingdao Shandong 266101 (CN); HU, Haitao, Qingdao Shandong 266101 (CN); LI, Yimin, Qingdao Shandong 266101 (CN)
(74) Representative: Ziebig & Hengelhaupt Patent- und Rechtsanwaltskanzlei PartG mbB
(86) International application number: PCT/CN2015/083312
(87) International publication number: WO 2016/119402

(56) References cited:
- EP-A2- 0 736 626
- EP-A2- 2 474 660
- CN-A- 102 587 091
- CN-A- 103 437 129
- CN-A- 104 047 149
- CN-U- 203 393 483
- KR-A- 20060 041 104
- US-A1- 2005 196 294
- US-A1- 2006 000 240
- US-A1- 2010 095 713

## Description

### TECHNICAL FIELD

The present disclosure relates to the technical field of washing machines, in particular to a mounting damping device of a double-head drainage pump of a washing machine.

### BACKGROUND

All drum washing machines use drainage pumps as active drainage equipment so as to be suitable for more complex using environments and supply better use feelings for users. A drainage pump of a traditional drum washing machine mainly runs in stages of drainage after washing, drainage after rising and dewatering in an integral washing procedure. But, with development of society, the water resource becomes more and more important, and drum washing machines capable of recycling the water resource emerge as the times require.

As the drum washing machine needs to recycle the water, the drainage pump not only needs to have a drainage function of the traditional drum washing machine, but also needs to have a function of draining drained water to a water treatment system and enabling the drained water to return to the drum washing machine. For example, a mode that two drainage pumps are mounted can be adopted to realize the functions, wherein one drainage pump controls drained water after washing or dewatering to be drained out of the washing machine, and the other drainage pump controls drained water after washing to be drained to a water reusing system, so that the two drainage pumps need to be mounted at the same time, not only is the mounting complexity increased, but also the manufacturing cost is increased to a certain extent.

A drainage pump suitable for the drum washing machine with the water reusing function exists, and the drainage pump integrates the two drainage pumps. According to a conventional drum washing machine, the drainage pump is generally and directly fixed to a bottom plate of the washing machine with screws or is indirectly fixed through a rubber washer when being fixed. The fixing manner causes poor damping effects, and the condition that the vibration of the drainage pump is transferred to the main body of the washing machine and transferred to outside cannot be well avoided, and high vibration and noise are generated when the drainage pump operates.

The conventional Chinese patent No. CN201410242349.6 named "Damping Cushion of Drainage Pump and Mounting Structure of Damping Cushion" relates to a drainage pump of a drum washing machine and a mounting structure of the drainage pump, wherein a supporting frame and L-shaped supporting legs are respectively arranged on two sides of the lower part of the drainage pump, a mounting plate is arranged at the lower part of the supporting frame and at least one fixing hole is fixed in the mounting plate. A cylindrical screw pillar is arranged on the bottom plate of the washing machine, and an assembling groove is formed in the bottom plate, on one side of the screw pillar. The support frame of the drainage pump is connected with the bottom plate of the washing machine through a first damping cushion and the screw pillar, and a second damping cushion can sleeve each of the L-shaped supporting legs of the drainage pump and is embedded in the assembling groove. The mounting damping device disclosed by the disclosure is simple and compact in structure, and convenient and efficient to mount, the drainage pump is mounted on the bottom plate of the washing machine through the support frame, the L-shaped supporting legs, the first damping cushion and the second damping cushions, so that vibration transfer when the drainage pump operates is reduced, the vibration and the noise of the washing machine are effectively reduced, the using feelings of users are improved, and the product quality of the washing machine is improved.

The damping cushion is difficult to mount, the number of needed damping cushions is large, the needed damping cushions are inconsistent, the damping cushion is difficult to assemble, the structure of a fixing bracket is complex, and processing and making are not easy. Therefore, how to realize fixed mounting of the drainage pump, and how to realize damping so as to prevent high noise from being generated become a technical problem to be urgently solved.

Document EP 2 474 660 A2 discloses a single-pump structure connected directly to the lower frame of a washing machine through a damping mount member.

### SUMMARY

In order to solve the problem, the present disclosure provides a mounting damping device of a double-head drainage pump of a washing machine, and particularly adopts the technical scheme as follows.

A washing machine is provided comprising a washing machine mounting plate, a double-head drainage pump and at least one mounting damping device, the double-head drainage pump comprising two drainage pumps sharing one water inlet, wherein the two drainage pumps are integrally connected with each other through a strengthened connector, and the strengthened connector is mounted on the washing machine mounting plate, wherein the mounting damping device used for relieving vibration of the double-head drainage pump is arranged between the strengthened connector and the washing machine mounting plate, and the strengthened connector comprises two mounting parts staggered fore and aft in the axial direction of the double-head pump, the two mounting parts are used for mounting the two drainage pumps, respectively, and lower parts of the two mounting parts extend downward to respectively form a first supporting mounting part and a second supporting mounting part, and the mounting damping device is respectively mounted on the first supporting mounting part and the second supporting mounting part.

Further, the mounting damping device comprises a main body made of an elastic soft material, a first damping cavity used for allowing the washing machine mounting plate to be assembled and a second damping cavity used for allowing the strengthened connector to be assembled are arranged in the main body.

Further, the main body adopts a groove-shaped structure, a notch is formed in the middle part of the groove-shaped structure and the notch clamps on the washing machine mounting plate, and the first damping cavity is the notch of the groove-shaped structure.

Further, a bevel angle is formed at the notch, and a plurality of convex rib positions are arranged on the upper wall and the lower wall of the notch correspondingly.

Further, the first damping cavity divides the main body into a first damping part and a second damping part which are mutually connected, and the second damping cavity is formed in the first damping part and/or the second damping part.

Further, the second damping cavity is a hollow cavity formed in the inner part of the first damping part and/or the second damping part. An opening is formed in one side, facing the first damping part and/or the second damping part, of the cavity, and the direction of the opening is opposite to that of an opening of the first damping cavity.

Further, clips used for limiting and fixing the strengthened connector are arranged on the main body and are symmetrically arranged on two sides of each of the second damping cavity.

Further, a lower part of the strengthened connector is a supporting mounting part used for being mounted on the washing machine mounting plate. A supporting mounting leg for being positioned and supported on the washing machine mounting plate are arranged on the supporting mounting part, and a mounting damping device is arranged on the supporting mounting leg.

Further, at least two supporting mounting legs are arranged on each of the first supporting mounting part and the second supporting mounting part in the perpendicular direction of the first supporting mounting part and the second supporting mounting part. The supporting mounting legs are respectively mounted in the two second damping cavities, and the first supporting mounting part and the second supporting mounting part are mounted between the two clips in a limiting manner.

Because the double-head drainage pump comprises two drainage pumps adopting different structures, the two drainage pumps are integrally connected with each other through the strengthened connector and are fixedly mounted on the washing machine mounting plate through the strengthened connector. Because the two drainage pumps are uneven in stress in the working process of the double-head drainage pump, vibration and noise are easy to generate, and the two drainage pumps are prone to damage. Therefore, the mounting damping device disclosed by the present disclosure is arranged between the strengthened connector and the washing machine mounting plate, and vibration and noise of the double-head drainage pump can be effectively relieved.

The shape of the mounting damping device disclosed by the present disclosure adopts the groove-shaped structure, the lengths of the upper end and the lower end of the groove-shaped structure can be different and the length of the upper end can be longer while the length of the lower end can be shorter. The first damping cavity is the notch of the groove-shaped structure, and the bevel angle is formed at the notch to facilitate mounting; and the two mounting grooves are formed in the inner parts of the back sides of the upper end and the lower end of the groove-shaped structure, and the second damping cavity is the mounting groove. The clips are arranged on two sides of the mounting grooves so as to prevent the mounting damping device from falling off in the assembly process or in the transportation process after assembly. The strip-shaped convex rib positions arc arranged on the upper wall and the lower wall of the notch correspondingly and are in contact with the washing machine mounting plate after being assembled, so that damping action can be achieved and resonance can be avoided.

The groove-shaped structure of the mounting damping device disclosed by the present disclosure is assembled through mounting holes in the washing machine mounting plate, the notch of the groove-shaped structure clamps on the upper side and the lower side of the washing machine mounting plate so as to achieve the action of upper and lower damping and the limiting function.

In order to save raw materials, according to the present disclosure, the wall thicknesses are set differently, the thickness of a wall which is in contact with the washing machine mounting plate is larger to improve the damping effect, and the thicknesses of other walls are smaller.

The mounting damping device disclosed by the present disclosure is easy to mount, has very good damping effects and limiting function, reduces the noise of the washing machine, brings user good feelings and increases the recognition degree of the user to a brand.

### BRIEF DESCRIPTION OF DRAWINGS

Fig. 1 is a stereoscopic structure mounting front view of a double-head drainage pump of the present disclosure;
Fig. 2 is a stereoscopic structure mounting rear view of the double-head drainage pump of the present disclosure;
Fig. 3 is a whole structure mounting rear view of the double-head drainage pump of the present disclosure;
Fig. 4 is an A-A plane section view of Fig. 3 of the present disclosure;
Fig. 5 is a mounting exploded schematic view of the double-head drainage pump and a filter of the present disclosure;
Fig. 6 is a stereoscopic structure front view of the filter of the present disclosure;
Fig. 7 is a stereoscopic structure rear view of the filter of the present disclosure;
Fig. 8 is a stereoscopic structure schematic view of a second check structure;
Fig. 9 is a partial enlarged view of Fig. 4 of the present disclosure;
Fig. 10 is a stereoscopic structure front view of a strengthened connector of the present disclosure;
Fig. 11 is a stereoscopic structure rear view of the strengthened connector of the present disclosure;
Fig. 12 is a stereoscopic structure front view of a mounting damping structure of the present disclosure;
Fig. 13 is a stereoscopic structure rear view of the mounting damping structure of the present disclosure;
Fig. 14 is a front view of the mounting damping structure of the present disclosure;
Fig. 15 is a B-B plane section view of Fig. 14 of the present disclosure.

Reference signs in the drawings: 1-first drainage motor; 2-first water outlet; 3-first check structure; 4-first pump housing; 5-first pump housing mounting part; 6-second water outlet; 7-second check structure;8-water inlet; 9-second pump housing; 10-second drainage motor; 11-strengthened connector; 12-washing machine mounting plate; 13-filter; 14-mounting damping structure; 15-connector; 401-first pump housing body; 402-water inlet pipe; 403-first water outlet pipe; 404-third water outlet pipe; 701-check part; 702-connecting column; 703-mounting part; 901-second pump housing water inlet; 902-second water outlet pipe; 1101-first mounting hole; 1102-first connecting part; 1103-second mounting hole; 1104-second connecting part; 1105-connecting part; 1106-mounting clamping position; 1107-supporting part; 1108-second supporting mounting part; 1109-supporting mounting leg; 1110-first supporting mounting part; 1111-supporting rib; 1301-water inlet part; 1302-second water outlet part; 1303-first water outlet part; 1304-filter mounting part; 1305-frame-shaped body; 1306-first side wall; 1307-second side wall; 1308-bottom wall; 1309-water inlet hole; 1310-closed base; 1401-first damping part; 1402-second damping part; 1403-clip; 1404-first damping cavity; 1405-second damping upper cavity; 1406-second damping lower cavity; 1407-convex rib position.

### DETAILED DESCRIPTION

A mounting damping device of a double-head drainage pump of a washing machine disclosed by the present disclosure is described in details below with reference to the accompanying drawings.

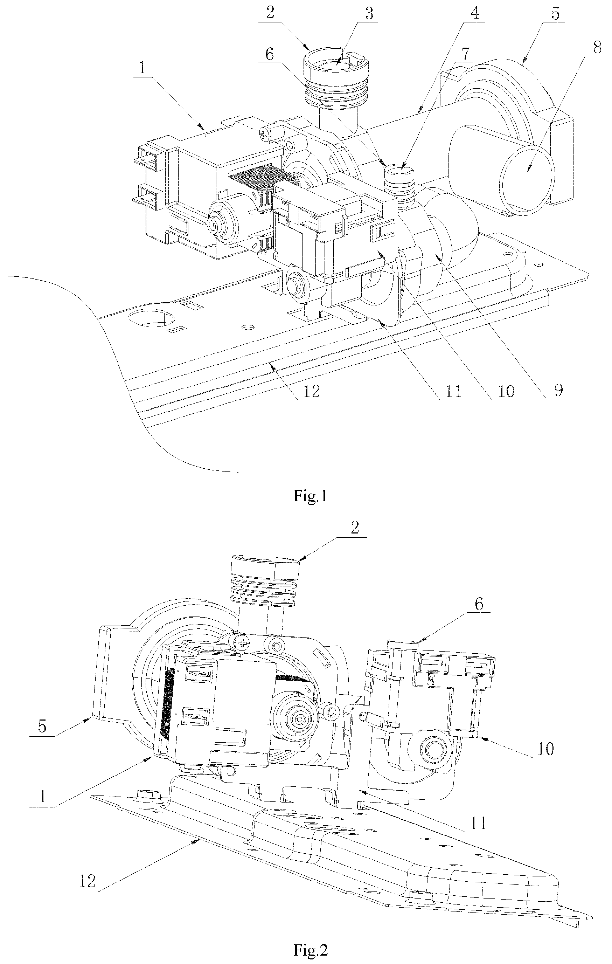

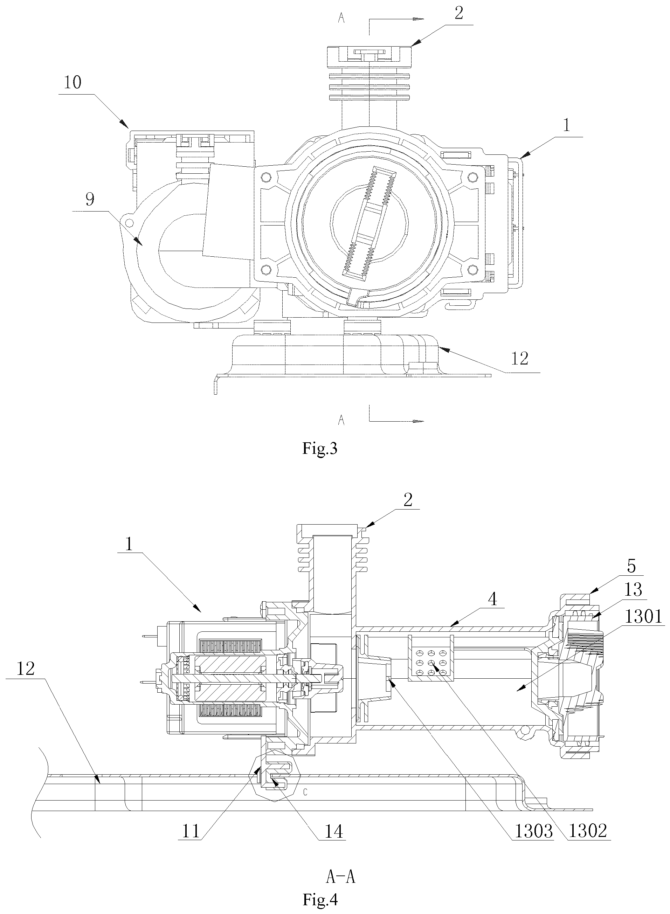

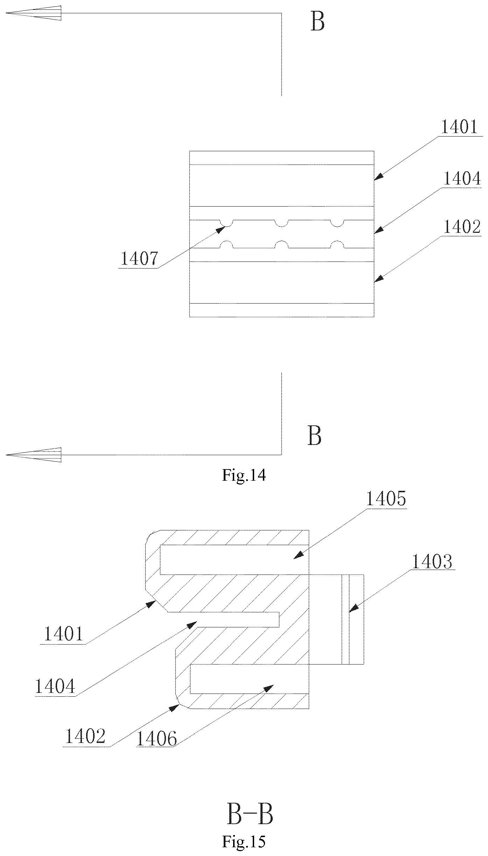

As shown in Fig. 1, Fig. 4, Fig. 9, Fig. 12, Fig. 13, Fig. 14 and Fig. 15, the mounting damping device of the double-head drainage pump of the washing machine is provided. The double-head drainage pump comprises at least two drainage pumps sharing one water inlet 8, the two drainage pumps are integrally connected with each other through the strengthened connector. The strengthened connector is mounted on the washing machine mounting plate 12, and the mounting damping device 14 used for relieving vibration of the double-head drainage pump is arranged between the strengthened connector and the washing machine mounting plate 12.

The double-head drainage pump comprises two drainage pumps adopting different structures, and the two drainage pumps are integrally connected with each other through the strengthened connector 11 and are fixedly mounted on the washing machine mounting plate 12 through the strengthened connector 11. Because the two drainage pumps are uneven in stress in the working process of the double-head drainage pump, vibration and noise are easy to generate, and the two drainage pumps are prone to damage. Therefore, the mounting damping device 14 disclosed by the present disclosure is arranged between the strengthened connector 11 and the washing machine mounting plate 12, and vibration and noise of the double-head drainage pump can be effectively relieved.

As being arranged between the strengthened connector 11 and the washing machine mounting plate 12, the mounting damping device 14 disclosed by the present disclosure needs to be assembled with both of the strengthened connector 11 and the washing machine mounting plate 12 together and has the damping action relative to both of the strengthened connector 11 and the washing machine mounting plate 12. As a preferred implementation of the present disclosure, the mounting damping device comprises a main body made of an elastic soft material, and a first damping cavity 1404 used for allowing the washing machine mounting plate 12 to be assembled and the second damping cavity used for allowing the strengthened connector to be assembled are arranged in the main body.

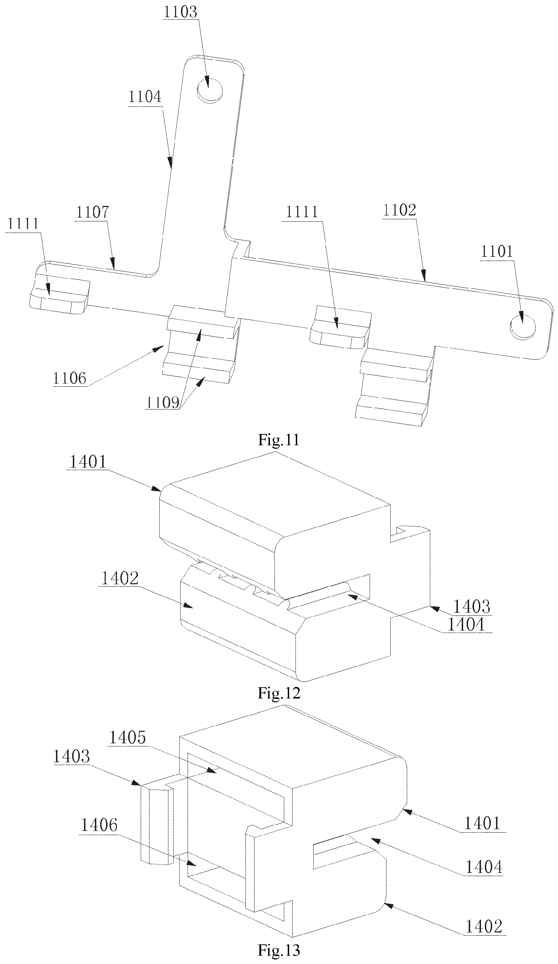

As a preferred implementation of the present disclosure, as shown in Fig. 12, Fig. 13, Fig. 14 and Fig. 15, the main body adopts a groove-shaped structure, a notch is formed in the middle part of the groove-shaped structure and the notch clamps the washing machine mounting plate 12, and the first damping cavity 1404 is the notch of the groove-shaped structure.

Further, a bevel angle is formed at the notch, and a plurality of convex rib positions 1407 are arranged on the upper wall and the lower wall of the notch correspondingly. The bevel angle is formed at the notch of the mounting damping device disclosed by the disclosure, so that mounting is convenient. The strip-shaped convex rib positions are arranged on the upper wall and the lower wall of the notch of the mounting damping device disclosed by the present disclosure correspondingly and the strip-shaped convex rib positions are in contact with the washing machine mounting plate after being assembled, so that damping action can be achieved and resonance can be avoided.

In the present disclosure, the first damping cavity 1404 of the mounting damping device divides the main body into a first damping part 1401 and a second damping part 1402 which are mutually connected, and the second damping cavity is formed in the first damping part 1401 and/or the second damping part 1402.

Further, the second damping cavity is a hollow cavity formed in the inner part of the first damping part 1401 and/or the second damping part 1402. An opening is formed in one side, facing the first damping part 401 and/or the second damping part 1402, of the cavity, and the direction of the opening is opposite to that of an opening of the first damping cavity 1404. This is mainly because one side of the mounting damping device 14 is mounted on the washing machine mounting plate 12, and the strengthened connector 11 is mounted on the other side of the mounting damping device 14.

Specifically, the upper part of the groove-shaped structure is the first damping part 1401, the lower part of the groove-shaped structure is the second damping part 1402, and two mounting grooves are correspondingly formed in the inner parts of the back sides of the upper end and the lower end of the groove-shaped structure and the mounting grooves are the second damping cavities.

Clips 1403 used for limiting and fixing the strengthened connector arc arranged on the main body of the mounting damping device disclosed by the present disclosure and the clips 1403 are symmetrically arranged on two sides of each of the second damping cavities.

The shape of the mounting damping device disclosed by the present disclosure adopts the groove-shaped structure, the lengths of the upper end and the lower end of the groove-shaped structure can be different and the length of the upper end can be longer while the length of the lower end can be shorter. The first damping cavity is the notch of the groove-shaped structure, and the bevel angle is formed at the notch to facilitate mounting. And the two mounting grooves are correspondingly formed in the inner parts of the back sides of the upper end and the lower end of the groove-shaped structure, and the second damping cavities are the mounting grooves. The clips are arranged on two sides of each of the mounting grooves so as to prevent the mounting damping device from falling off in the assembly process or in the transportation process after assembly. The strip-shaped convex rib positions are arranged on the upper wall and the lower wall of the notch correspondingly and are in contact with the washing machine mounting plate after being assembled, so that damping action can be achieved and resonance can be avoided.

The groove-shaped structure of the mounting damping device disclosed by the present disclosure is assembled through mounting holes in the washing machine mounting plate, the notch of the groove-shaped structure clamps on the upper side and the lower side of the washing machine mounting plate so as to achieve the action of upper and lower damping and the limiting function.

In order to save raw materials, according to the present disclosure, the wall thicknesses are set differently, the thickness of a wall which is in contact with the washing machine mounting plate is larger to improve the damping effect, and the thicknesses of other walls are smaller.

As a preferred implementation of the present disclosure, a lower part of the strengthened connector is a supporting mounting part used for being mounted on the washing machine mounting plate 12. A supporting mounting leg for being positioned and supported on the washing machine mounting plate 12 is arranged on the supporting mounting part, and a mounting damping device is arranged on the supporting mounting lcg.

Specifically, the strengthened connector comprises two mounting parts used for mounting the two drainage pumps, respectively. Lower parts of the two mounting parts extend downward to respectively form a first supporting mounting part 1110 and a second supporting mounting part 1108, and the mounting damping devices are respectively mounted on the first supporting mounting part 1110 and the second supporting mounting part 1108.

Further, at least two supporting mounting legs 1109 are arranged on each of the first supporting mounting part 1110 and the second supporting mounting part 1108 in the perpendicular direction of the first supporting mounting part 1110 and the second supporting mounting part 1108. The supporting mounting legs 1109 are respectively mounted in the two second damping cavities, and the first supporting mounting part 1110 and the second supporting mounting part 1108 are mounted between the two clips 1403 in a limiting manner.

At least two supporting mounting legs 1109 are arranged on each of the first supporting mounting part 1110 and the second supporting mounting part 1108 of the mounting damping device disclosed by the present disclosure, and correspondingly, the second damping cavities comprise a second damping upper cavity 1405 and a second damping lower cavity 1406 so as to realize assembly with the supporting mounting legs 1109 together.

In the present disclosure, according to the specific structure of the strengthened connector 11 and the mounting manner of the mounting plate 12 mounted on the washing machine, the first damping chamber 1404 which is assembled with the washing machine mounting plate 12 together and the second chamber for assembling the supporting mounting legs 1109 of the strengthened connector 11 are respectively arranged on the main body of the mounting damping device. So the strengthened connector 11 of the embodiment is not in direct contact with the washing machine mounting plate 12, but is fixedly connected with the washing machine mounting plate 12 through the supporting mounting legs 1109.Vibration and noise generated by the strengthened connector 11 and the washing machine mounting plate 12 in the working process of the double-head drainage pump can be effectively reduced, and a user can acquire better user experience.

As shown in Fig. 1, Fig. 2, Fig. 3, Fig. 4 and Fig. 5, this embodiment is a double-head drainage pump of a washing machine, and particularly adopts the following technical scheme.

A double-head drainage pump of a washing machine comprises a pump housing in which a water inlet 8 is formed, at least one first water outlet 2 and at least one second water outlet 6 are formed in the pump housing. A first drainage motor 1 is mounted on the pump housing corresponding to the first water outlet 2 and a second drainage motor 10 is mounted on the pump housing corresponding to the second water outlet 6. The first drainage motor 1 controls opening/closing of the first water outlet 2, and the second drainage motor 10 controls opening/closing of the second water outlet 6.

The double-head drainage pump of the washing machine of the present embodiment, the first water outlet 2 and the second water outlet 6 which share one water inlet are formed in the pump housing. The first water outlet 2 is used for realizing drainage of the washing machine, and the second water outlet 6 is used for realizing water reusing drainage, so that the double-head drainage pump of the embodiment can be suitable for a drum washing machine with a water reusing function and is high in integration level of the whole structure, simple in structure and easy to mount.

The pump housing of the double-head drainage pump of the embodiment at least comprises a first pump housing 4 and a second pump housing 9 which internally communicate with each other. The water inlet 8 and the first water outlet 2 are respectively formed in the first pump housing 4, and the second water outlet 6 is formed in the second pump housing 9. The first drainage motor 1 is mounted on the first pump housing 4, and the second drainage motor 10 is mounted on the second pump housing 9.

The pump housing of the double-head drainage pump of the embodiment realizes internal communication but is not integrally designed, and comprises two parts including the first pump housing 4 and the second pump housing 9 which realizes internal mutual communication, so that the first pump housing 4 and the second pump housing 9 can be separately designed according to actual drainage needs. Particularly, the first pump housing 4 and the second pump housing 9 depends mainly on drainage lifts of the first water outlet 2 and the second water outlet 6, and generally, the larger the drainage lift of drainage hole is, the larger the volume of the arranged pump housing is.

However, because the second water outlet 6 is connected to a water reusing system in the actual process, and the water reusing system needs to carry out a filter process on washing water, the drainage lift of the second water outlet 6 of the double-head drainage pump is smaller than that of the first water outlet 2 of the present disclosure so as to ensure sufficient filtering to reach good filtering effects. Therefore, the volume of the second pump housing 9of the double-head drainage pump is smaller than that of the first pump housing 4 of the present disclosure. In addition, with the design that the volume of the second pump housing 9 is smaller than that of the first pump housing 4, the volume of the whole structure of the double-head drainage pump of the embodiment can be reduced, so that too long length of the double-head drainage pump in a certain direction is prevented, and mounting is more convenient.

Therefore, the double-head drainage pump of the embodiment realizes the effects of water reusing and drainage and can replace the following complex structures and parts, such as a three-way valve, and the like.

In the present embodiment, because the design manner that the volume of the second pump housing 9 is smaller than that of the first pump housing 4 is adopted, the water inlet 8 needs to be formed in the first pump housing 4, so that the water inlet quantity of the water inlet 8 can be increased as much as possible. It ensures smooth water outgoing of the first water outlet 2 and the second water outlet 6 and avoids the condition that drainage discontinuous of the drainage holes as the water inlet quantity of the water inlet 8 is limited by the volume of the second pump housing 9.

Specifically, a third water outlet which communicates with the water inlet 8 is also formed in the first pump housing 4 of the present embodiment, and the second pump housing 9 is connected with the third water outlet so as to realize internal mutual communication between the first pump housing 4 and the second pump housing 9.

The first pump housing 4 of the double-head drainage pump of the embodiment comprises a first pump housing body 401, a water inlet pipe 402, a first water outlet pipe 403 and a third water outlet pipe 404. Wherein the first pump housing body 401 is internally provided with a hollow channel, the water inlet pipe 402, the first water outlet pipe 403 and the third water outlet pipe 404 communicate with the hollow channel of the first pump housing body 401 separately. And the water inlet 8, the first water outlet 2 and the third water outlet are correspondingly formed in the end parts of the water inlet pipe 402, the first water outlet pipe 403 and the third water outlet pipe 404.

Drained water of the drum washing machine of the embodiment enters the internal hollow channel of the pump housing body 401 of the first pump housing 4 through the water inlet pipe 402 and then separately enters the first water outlet pipe 403 and the third water outlet pipe 404 which communicate with the hollow channel. And the drained water in the third water outlet pipe 404 enters to the second pump housing 9 so as to separately introduce the drained water into the two pump housings. Drainage of the drained water in the first pump housing 4 is controlled by the first drainage motor 1 and the second drainage motor 10 separately, while the drained water in the second pump housing 9 is only controlled by the second drainage motor 10.

As a preferred implementation of the embodiment, the water inlet pipe 402, the first water outlet pipe 403 and the third water outlet pipe 404 communicate with the side wall of the first pump housing body 401, the third water outlet pipe 404 and the water inlet pipe 402 are arranged on a same plane, and the third water outlet pipe 404 and the first water outlet pipe 403 are arranged on different planes. In this way, the second pump housing 9 is arranged on one side of the first pump housing 4 in the manner that the second pump housing 9 and the first pump housing 4 are in parallel, and the whole axial length of the double-head drainage pump of the embodiment is reduced.

Further preferably, the third water outlet pipe 404 and the water inlet pipe 402 are arranged on the same side of the first pump housing body 401. In this way, the second pump housing 9 and the water inlet pipe 402 are arranged on the same side of the first pump housing 4, so that transverse width during mounting is reduced, and mounting is more convenient.

For enabling drainage to be smooth and residual pollutants to successfully flow into the pump housing so as to facilitate manual cleaning, as a preferred implementation of the present disclosure, the water inlet 8 of the water inlet pipe 402 is formed in the manner of slanting upward by 5-15 degrees.

How to realize communication between the second pump housing 9 and the first pump housing 4 is an important technical problem to be solved in the embodiment, and specifically, the following two technical schemes can be adopted.

Scheme I is that the third water outlet pipe 404 of the embodiment is an L-shaped pipeline, one end of the third water outlet pipe 404 integrally communicates with the side wall of the first pump housing 4, and the other end integrally communicates with the inner part of the second pump housing 9. In this way, the first pump housing 4 and the second pump housing 9 are integrally formed, the industrial integration degree is higher, and the assembly is simpler and more convenient.

Scheme II is that a second pump housing water inlet 901 which communicates with the second water outlet 6 is formed in the second pump housing 9 of the embodiment and is connected with the third water outlet of the first pump housing 4Specifically, the second pump housing water inlet 901 communicates with the third water outlet of the first pump housing 4 through a connector 15, and preferably, the connector 15 is a soft water pipe. In this way, the first pump housing 4 and the second pump housing 9 are assembled after being separately processed, so that processing is simpler, connection is easier to realize by adopting a soft water pipe, and the processing accuracy requirements are reduced.

In a word, the first pump housing 4 and the second pump housing 9 are arranged in a split mode, and the second pump housing 9 communicates with the first pump housing 4 through the connector 15; or the first pump housing 4 and the second pump housing 9 are integrally formed.

As a preferred implementation of the present embodiment, the whole body of the first pump housing 4 of the embodiment adopts a columnar structure with a hollow channel inside, specifically a cylindrical structure. An end part of one end of the columnar structure is provided with the first drainage motor 1, and the water outlet direction of the first water outlet 2 is vertically upward, i.e., the axis of the first water outlet 2 is arranged perpendicular to the medial axis of the columnar structure. An end part of the other end of the columnar structure is a disc-shaped first pump housing mounting part 5, a threaded mounting hole is formed in the first pump housing mounting part 5. And the first pump housing 4 is mounted on the inner wall of a front panel of the drum washing machine through threads. The third water outlet pipe 404 and the water inlet pipe 402 both communicate with the side wall of the columnar structure and are located on the same side.

As a preferred implementation of the embodiment, the drainage lift of the second water outlet 6 is smaller than that of the first water outlet 2. Specifically, the drainage lift of the second water outlet 6 is 0.2-0.8m, so that the second water outlet 6 is more suitable for effectively carrying out filter treatment on reused water in the water reusing system.

As a preferred implementation of the embodiment, a first check structure 3 is arranged on the first water outlet 2, a second check structure 7 is arranged on the second water outlet 6. The second check structure 7 is integrally formed by a soft material and comprises an annular mounting part 703 and a disc-shaped check part 701, the mounting part 703 sleeves the pipe wall of the second water outlet 6, and the check part 701 covers the second water outlet 6.

The check structure is arranged at each of the two water outlets of the double-head drainage pump of the embodiment, so that water reflux can be avoided, and secondary pollution is avoided.

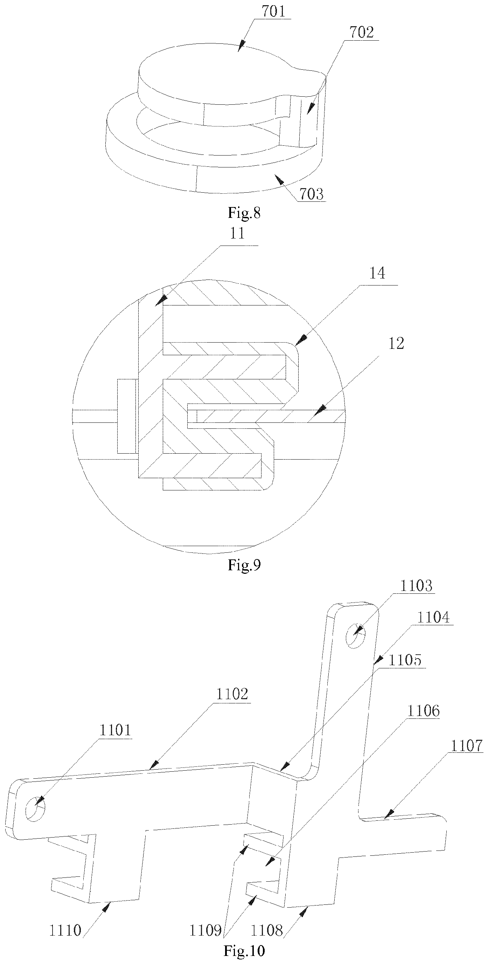

As the drainage lift of the second water outlet 6 is smaller, the inside diameter of the second water outlet 6 is also smaller, and in the embodiment, the second check structure 7 with simple structure is designed according to such structure characteristics of the second water outlet 6. As shown in Fig. 8, the second check structure 7 is integrally formed by the soft material and comprises the mounting part 703, the check part 701 and a connecting column 702 for connecting the mounting part 703 and the check part 701.The mounting part 703 sleeves the pipe wall of the second water outlet 6, and the check part 701 covers the second water outlet 6under a natural state. The check part 701 is opened under the action of a water flow when the water flow flows out from the second water outlet 6 and more tightly covers the second water outlet 6 under the action of a reverse water flow. So the second water outlet 6 can only carry out one-way drainage, water cannot reversely flow back into the second pump housing 9, and the check action is realized. Therefore, the second check structure 7 of the present embodiment is simpler in structure, more convenient to mount and obvious in check effect.

As shown in Fig. 1, Fig. 2, Fig. 3, Fig. 4, Fig. 9, Fig. 10 and Fig. 11, this embodiment is a strengthened connector suitable for a double-head drainage pump of a washing machine. The double-head drainage pump comprises at least two drainage pumps which share one water inlet 8, the two drainage pumps of the double-head drainage pump are integrally connected through the strengthened connector 11, and the strengthened connector 11 is fixedly mounted on a washing machine mounting plate 12.

With different structures of the two drainage pumps of the double-head drainage pump, the double-head drainage pump is uneven in stress, so that vibration is easy to generate, and the two drainage pumps are prone to damage during the vibration if connection between the two drainage pumps is not firm enough. Therefore, the strengthened connector 11 of the embodiment enables the two drainage pumps to be firmly connected together on account of the structural characteristics of the double-head drainage pump, and the two drainage pumps are fixedly mounted on the washing machine mounting plate 12 through the strengthened connector 11 to guarantee the stability of mounting.

As being used for enabling the two drainage pumps of the double-head drainage pump to be integrally connected with each other, the strengthened connector 11 of the embodiment comprises two mounting parts for mounting the two drainage pumps. And the two mounting parts are arranged in a fore and aft staggering manner in the axial direction of the double-head drainage pump, so that the two drainage pumps are arranged in the fore and aft staggering manner in the axial direction.

The strengthened connector 11 of the embodiment comprises the two mounting parts, and the two mounting parts are staggered fore and aft in the axial direction of a pump housing so as to realize replacement of a radial space with an axial space. Specifically, because the pump housing connecting parts for connecting drainage motors are arranged on the pump housing, the radial sizes of the pump housing connecting parts are generically larger to ensure the mounting stability of the drainage motors, and the two pump housing connecting parts are integrally connected with each other through the strengthened connector 11 at the same time and are mounted on the washing machine mounting plate 12. If the two pump housing connecting parts arc arranged on the same radial end surface, the radial mounting distance between the two pump housing connecting parts needs to be enlarged, while the two mounting parts of the strengthened connector 11 are arranged in the fore and aft staggering manner in the axial direction of the pump body, so that the two pump housing connecting parts are mounted in the fore and aft staggering manner in the axial direction. And the adjacent parts of the two pump housing connecting parts can be axially overlapped, and the mounting distance on the same radial end surface is saved.

As shown in Fig. 9, Fig. 10 and Fig. 11, the strengthened connector comprises a first connecting part 1102, a second connecting part 1104 and a connecting part 1105, wherein the first connecting part 1102 and the second connecting part 1104 are arranged in the fore and aft staggering manner in the axial direction of the strengthened connector, and the connecting part 1105 is arranged between the first connecting part 1102 and the second connecting part 1104 to connect the first connecting part 1102 and second connecting part 1104 for one piece.

In the embodiment, the first connecting part 1102of the strengthened connector of is connected with one drainage pump of the double-head drainage pump, the second connecting part 1104is connected with the other drainage pump, and the first connecting part 1102 and the second connecting part 1104 are arranged in the fore and aft staggering manner and are integrally connected with each other through the connecting part 1105.Therefore, the two drainage pumps of the double-head drainage pump are integrally connected with each other through the strengthened connector 11 and are arranged in the fore and aft staggering manner, and the radial mounting space is saved.

A first mounting hole 1101 used for being connected with the double-head drainage pump is formed in the first connecting part 1102 of the strengthened connector of the embodiment. A second mounting hole 1103 used for being connected with the double-head drainage pump is formed in the second connecting part 1104, fixed mounting can be carried out by adopting bolts or screws, and the mounting manner is simpler and more convenient.

In the embodiment, the strengthened connector 11 of is fixedly mounted on the washing machine mounting plate 12, so that the double-head drainage pump is fixedly mounted on the washing machine mounting plate 12.And specifically, a part of the lower part of the first connecting part 1102cxtcnds downward to form a first supporting mounting part 1110, a part of the lower part of the second connecting part 1104 extends downward to form a second supporting mounting part 1108, and the first supporting mounting part 1110 and the second supporting mounting part 1108 are used for being mounted on the washing machine mounting plate 12.

The supporting mounting parts connected with the washing machine mounting plate 12 are arranged at the lower parts of the corresponding mounting parts of the strengthened connector 11 of the embodiment, so that multi-point supporting action is applied to the strengthened connector 11, and mounting stability of the double-head drainage pump is further guaranteed.

Specifically, in order to enable the strengthened connector 11 of the embodiment to be fixedly mounted on the washing machine mounting plate 12, at least two supporting mounting legs 1109 are arranged on each of the first supporting mounting part 1110 and the second supporting mounting part 1108 in the perpendicular direction, and a mounting clamping position 1106 used for clamping the washing machine mounting plate 12 is formed between the every two corresponding supporting mounting legs 1109.

The embodiment realizes fixed mounting of the strengthened connector 11 by adopting a manner of enabling the mounting clamping position 1106 formed between every two corresponding supporting mounting legs 1109 to clamp the washing machine mounting plate 12. Correspondingly, the mounting holes are formed in the washing machine mounting plate 12, the first supporting mounting part 1110 and the second supporting mounting part 1108 go deep into the corresponding mounting holes separately, and the two supporting mounting legs 1109 clamp the washing machine mounting plate 12. So the mounting manner of the strengthened connector 11 of the embodiment is simpler and more convenient. In addition, a damping cushion can sleeve each of the supporting mounting legs 1109, so that the damping action on the double-head drainage pump is realized, and noise in the using process is reduced.

In order to further strengthen the supporting action of the strengthened connector 11 on the double-head drainage pump, the first connecting part 1102 and a supporting part 1107 of the strengthened connector 11 of the embodiment extend in the perpendicular direction to form two supporting ribs 1111. And the supporting ribs 1111 are both supported on the upper surface of the washing machine mounting plate 12. The supporting stability can be further strengthened through the supporting action of the supporting ribs 1111.

Further, the supporting ribs 1111 are arranged in parallel with the supporting mounting legs 1109, and the supporting ribs 1111 and the supporting mounting legs 1109 are arranged on the same side of the strengthened connector 11 or arranged on two sides of the strengthened connector 11 separately. Preferably, the supporting ribs 1111 and the supporting mounting legs 1109 are arranged on two sides of the strengthened connector 11 separately, so that effective supporting action can be applied to the two sides of the strengthened connector.

In order to further reduce the length of the pump housing in the radial direction, the mounting directions of the two drainage motors are perpendicular to each other. Therefore, in the embodiment the first connecting part 1102 of the strengthened connector 11 of is transversely arranged, the second connecting part 1104 is vertically arranged, and a part of one side of the second connecting part 1104 transversely extends to form the supporting part 1107, and the supporting part 1107 and the first connecting part 1102 are arranged in reverse directions. With vertical arrangement of the second connecting part 1104 of the strengthened connector of the embodiment, support on the second connecting part 1104 after connection of the double-head drainage pump is insufficient or poor, so that a part of one side of the second connecting part 1104 transversely extends to form the supporting part 1107, and the supporting part 1107 can further support the second connecting part 1104 to ensure the whole mounting stability.

The strengthened connector 11 of the embodiment is an integrally stamped sheet metal piece, so that the integrity of the strengthened connector 11 is stronger, and the connection stability effect is better.

Specifically, the two drainage pumps of the double-head drainage pump of the embodiment respectively comprise a first pump housing 4 and a second pump housing 9 which internally communicate with each other. And the water inlet 8 is formed in the first pump housing 4; and the strengthened connector comprises two mounting parts used for mounting the first pump housing 4 and the second pump housing 9 correspondingly.

Furthermore, the first pump housing 4 and the second pump housing 9 are arranged in parallel, a first pump housing mounting part is arranged at the end part of one end of the first pump housing 4 and a second pump housing mounting part is arranged at the end part of one end of the second pump housing 9, and a first drainage motor 1 is mounted on the first pump housing mounting part and a second drainage motor 10 is mounted on the second pump housing mounting part. The two mounting parts of the strengthened connector are correspondingly connected with the first pump housing mounting part and the second pump housing mounting part, so that the first pump housing mounting part and the second pump housing mounting part are arranged in the fore and aft staggering manner in the axial direction.

The strengthened connector 11, the first drainage motor 1 and the second drainage motor 10 of the embodiment are all connected to the pump housing mounting parts, so that the strengthened connector 11 and the drainage motors can share one mounting hole position without independently forming another hole position, and mounting is simpler.

In the embodiment, the double-head drainage pump of comprises the pump housing in which the water inlet 8, at least one first water outlet 2 and at least one second water outlet 6 are formed, the first drainage motor 1 for controlling opening/closing of the first water outlet 2 is mounted on the pump housing corresponding to the first water outlet 2, and the second drainage motor 10 for controlling opening/closing of the second water outlet 6 is mounted on the pump housing corresponding to the second water outlet 6; and the strengthened connector enables the first drainage motor 1 and the second drainage motor 10 to be integrally connected with each other.

As shown in Fig. 1, Fig. 3, Fig. 4, Fig. 5, Fig. 6 and Fig. 7, this embodiment discloses a filter suitable for a double-head drainage pump of a washing machine. The double-head drainage pump comprises a pump housing, a water inlet and at least two water outlets sharing the water inlet are formed in the pump housing, opening/closing of the two water outlets are respectively controlled by two drainage motors. The filter 13 is arranged among the two water outlets and the water inlet inside the pump housing and the filter 13 comprises at least two water outlet parts corresponding to the two water outlets, and a filter part is arranged on at least one water outlet part.

The filter 13 of the embodiment is arranged inside the pump housing of the double-head drainage pump and located among the two water outlets and the water inlet, so that drained water of the washing machine is drained from the two water outlets after being filtered. The filter 13 of the embodiment can filter out threads and sundries in the drained water so as to prevent the threads and the sundries from blocking the water outlets.

Additionally, due to different drainage actions of the two water outlets of the embodiment, the filter part can be arranged on only one of the two water outlet parts according to the concrete design needs. Thus the structure of the filter is simplified, and the manufacturing cost is reduced on the basis of meeting the filter requirements.

The filter of the embodiment comprises a frame-shaped body 1305, wherein a water inlet part 1301 and a second water outlet part 1302 are arranged between two side frames of the frame-shaped body 1305, and a first water outlet part 1303 is arranged at the end part, inside the pump housing, of the frame-shaped body 1305.

The drained water of the first water outlet part 1303 of the embodiment is directly drained out from the washing machine, so that the drained water is not filtered to a great extent, and only the threads and the sundries in the drained water need to be filtered; and in addition, excessive filtering can influence the drainage speed of the first water outlet part 1303So the first water outlet part 1303 of the embodiment directly communicates with the water inlet part 1301.

Further, a cross rib position is arranged on the first water outlet part 1303 of the embodiment to be used for filtering out the threads and the sundries in the drained water and preventing the threads and the sundries from blocking the water outlet corresponding to the first water outlet part 1303.

As a preferred implementation of the embodiment, the end part of one end, inside the pump housing, of the frame-shaped body 1305 is a closed base 1310, and the closed base 1310 is in a disc shape and is in contact with the inner wall of the pump housing. The first water outlet part 1303 is a boss-shaped water outlet formed in the closed base 1310.

The drained water of the water outlet corresponding to the second water outlet part 1302 of the embodiment is introduced into a water reusing system of the washing machine, and the water reusing system reuses the drained water after filtering and purifying the drained water. So the requirement for the filtering degree of the water drained from the second water outlet part 1302 is higher, and the filter part with a higher filtering degree needs to be arranged on the second water outlet part 1302 so as to filter out the threads or the sundries to the maximum degree.

As a preferred implementation of the embodiment, the second water outlet part 1302 is in tight contact with the pump housing, and the filter part is arranged on the second water outlet part 1302.

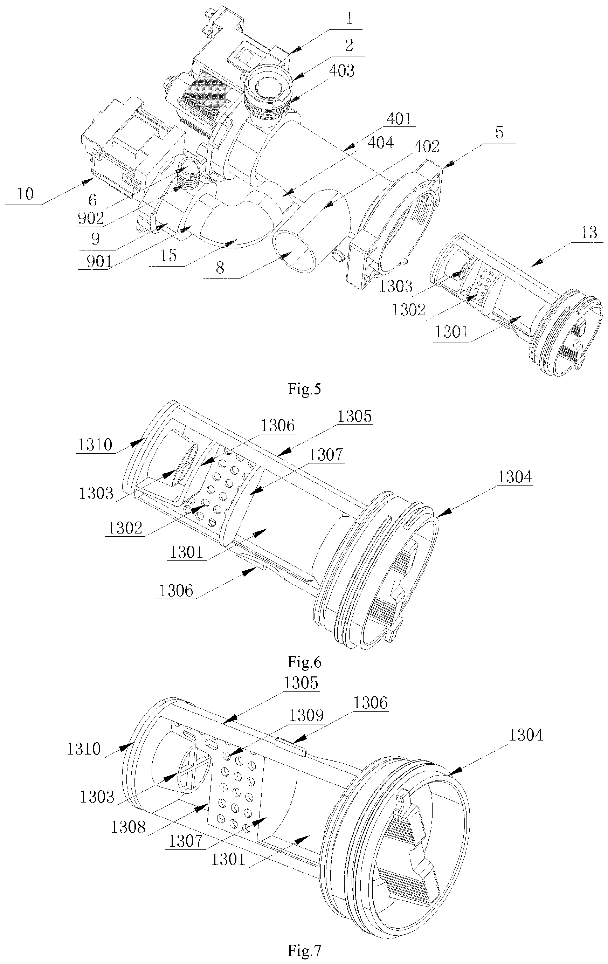

As shown in Fig. 6 and Fig. 7, specifically, the second water outlet part 1302 comprises a bottom wall 1308, a first side wall 1306 and a second side wall 1307, the first side wall 1306 and the second side wall 1307 are connected with the bottom wall 1308, the bottom wall 1308 is connected with the two side frames of the frame-shaped body 1305. A water outlet cavity is formed among the bottom wall 1308, the first side wall 1306, the second side wall 1307 and the inner wall of the pump housing and the water outlet chamber is respectively communicated with one water outlet and one water inlet.

Further, a plurality of water inlet holes 1309 are formed in the bottom wall 1308 to form the filter part, and the first side wall 1306 and the second side wall 1307 are in tight contact with the inner wall of the pump housing on one side of the bottom wall 1308, so that a water flow can enter the water outlet chamber from the filter part only.

The pore diameter of each water inlet hole 1309 of the embodiment is small to filter the drained water to the maximum degree, and besides, the amount of the water inlet holes 1309 is large to ensure the drainage lift of the water outlet corresponding to the second water outlet part 1302.

Further, one side of the bottom wall 1308 extends toward and is connected with the end part of the first water outlet part 1303, and the first side wall 1306 is arranged along and is connected with the afore mentioned side of the bottom wall 1308.

In this manner, on one hand, the area of the bottom wall 1308 is increased, and the filtering surface and the water inlet quantity of the second water outlet part 1302 are also increased. On the other hand, the bottom wall 1308 is connected with three surfaces of the frame-shaped body 1305, so that connection is more stable.

Because the first water outlet part 1303 and the second water outlet part 1302 of the embodiment need to be arranged corresponding to the two water outlets, or filtering effects on water drained from the second water outlet part 1302 cannot be realized. Therefore, as a preferred implementation of the embodiment, a limiting block 1306 is arranged on at least one side frame of the frame-shaped body 1305 of the embodiment, a limiting chute is formed in the inner wall of the pump housing, and the limiting block 1306 slides into the pump housing along the limiting chute, so that the two water outlet parts of the filter and the two water outlets of the double-head drainage pump are mounted in a corresponding manner.

Meanwhile, a conventional filter is mounted in the pump housing in a threaded mounting manner, while the filter 13 cannot rotate and then cannot be mounted in a threaded manner by limiting the limiting block 1306 of the filter 13 in the chute of the pump housing. In order to enable the filter 13 of the embodiment to be mounted in the pump housing without changing the threaded mounting manner, as a preferred implementation of the embodiment, The filter mounting part 1304 capable of freely rotating is connected to the other end part of the frame-shaped body 1305 of the embodiment, the filter mounting part 1304 is fixedly mounted on the pump housing, and the water inlet part 1301 is formed between the second water outlet part 1302 and the filter mounting part 1304.

Specifically, a neck is arranged at the other end part of the frame-shaped body 1305, and the filter mounting part 1304 is clamped in the neck and can freely rotate.

As a preferred implementation of the embodiment, the pump housing at least comprises a first pump housing 4 and a second pump housing 9 which internally communicate with each other, a water inlet 8 and a first water outlet 2 are formed in the first pump housing 4, and a second water outlet 6 is formed in the second pump housing 9.The filter is mounted in an inner chamber inside the first pump housing 4, one water outlet part of the filter is arranged corresponding to the first water outlet2, and the other water outlet part is arranged corresponding to the connecting part of the first pump housing 4 and the second pump housing 9.

Specifically, a third water outlet which commutates with the water inlet 8 is also formed in the first pump housing 4, and the second pump housing 9 is connected with the third water outlet. And the first water outlet part 1303 is arranged corresponding to the first water outlet 2, and the second water outlet part 1302 is arranged corresponding to the third water.

The above mentioned should not make any limit in term of form of the present disclosure, but is merely used as preferred embodiments of the present disclosure, and although the above mentioned as the preferred embodiments is disclosed, the preferred embodiments are not intended to limit the present disclosure. Various changes or modifications can be made by the persons skilled in the art according to the prompted technical content without departing from the scope of the claims.

## Claims

1. A washing machine comprising a washing machine mounting plate (12), a double-head drainage pump and at least one mounting damping device (14), the double-head drainage pump comprising two drainage pumps sharing one water inlet (8), wherein the two drainage pumps are integrally connected with each other through a strengthened connector (11), and the strengthened connector (11) is mounted on the washing machine mounting plate (12), wherein the mounting damping device (14) used for relieving vibration of the double-head drainage pump is arranged between the strengthened connector (11) and the washing machine mounting plate (12), and the strengthened connector (11) comprises two mounting parts staggered fore and aft in the axial direction of the double-head drainage pump, the two mounting parts are used for mounting the two drainage pumps, respectively, and lower parts of the two mounting parts extend downward to respectively form a first supporting mounting part (1110) and a second supporting mounting part (1108), and the mounting damping device (14) is respectively mounted on the first supporting mounting part (1110) and the second supporting mounting part (1108).

2. The washing machine according to claim 1, wherein the mounting damping device (14) comprises a main body made of an elastic soft material,
and a first damping cavity (1404) used for allowing the washing machine mounting plate (12) to be assembled and a second damping cavity used for allowing the strengthened connector (11) to be assembled are arranged in the main body.

3. The washing machine according to claim 2, wherein the main body adopts a groove-shaped structure,
a notch is formed in a middle part of the groove-shaped structure and the notch clamps on the washing machine mounting plate (12), and
the first damping cavity (1404) is selected from the notch of the groove-shaped structure.

4. The washing machine according to claim 3, wherein a bevel angle is formed at the notch, and a plurality of convex rib positions (1407) are arranged on an upper wall and a lower wall of the notch correspondingly.

5. The washing machine according to any one of claims from 2 to 4, wherein the first damping cavity (1404) divides the main body into a first damping part (1401) and a second damping part (1402) which are mutually connected, and the second damping cavity is formed in the first damping part (1401) and/or the second damping part (1402).

6. The washing machine according to any one of claims from 2 to 5, wherein the second damping cavity is selected from a hollow cavity formed in the inner part of the first damping part (1401) and/or the second damping part (1402),
an opening is formed in one side, facing the first damping part (1401) and/or the second damping part (1402), of the cavity, and a direction of the opening is opposite to that of an opening of the first damping cavity (1404).

7. The washing machine according to any one of claims from 2 to 6, wherein clips (1403) used for limiting and fixing the strengthened connector (11) are arranged on the main body, and the clips (1403) are symmetrically arranged on two sides of the second damping cavity.

8. The washing machine according to any one of claims from 1 to 7, wherein a lower part of the strengthened connector (11) is a supporting mounting part used for being mounted on the washing machine mounting plate (12),
a supporting mounting leg (1109) for being positioned and supported on the washing machine mounting plate (12) is arranged on the supporting mounting part, and
the mounting damping device (14) is arranged on the supporting mounting leg (1109).

9. The washing machine according to any one of claims 7 or 8, wherein at least two supporting mounting legs (1109) are arranged on each of the first supporting mounting part (1110) and the second supporting mounting part (1108) in the perpendicular direction of the first supporting mounting part (1110) and the second supporting mounting part (1108),
and the supporting mounting legs (1109) are respectively mounted in the two second damping cavities, and the first supporting mounting part (1110) and the second supporting mounting part (1108) are mounted between the two clips (1403) in a limiting manner.

## Patentansprüche

1. Waschmaschine, umfassend eine Waschmaschinenmontageplatte (12), eine doppelköpfige Abflusspumpe und mindestens eine Montagedämpfungsvorrichtung (14),
wobei die doppelköpfige Abflussspumpe mindestens zwei Abflussspumpen umfasst, die einen Wassereinlass (8) teilen, wobei
die zwei Abflussspumpen durch ein verstärktes Verbindungselement (11) einstückig miteinander verbunden sind und das verstärkte Verbindungselement (11) auf der Waschmaschinenmontageplatte (12) montiert ist, wobei die Montagedämpfungsvorrichtung (14), die zur Reduktion der Vibration der doppelköpfigen Abflussspumpe verwendet wird, zwischen dem verstärkten Verbindungselement (11) und der Waschmaschinenmontageplatte (12) angeordnet ist und das verstärkte Verbindungselement (11) zwei Montageteile umfasst, die in der axialen Richtung der doppelköpfigen Abflussspumpe nach vorne und nach hinten gestaffelt sind,
die zwei Montageteile jeweils zum Montieren der zwei n verwendet werden und untere Teile der zwei Montageteile sich nach unten erstrecken, um jeweils ein erstes stützendes Montageteil (1110) und ein zweites stützendes Montageteil (1108) auszubilden, und die Montagedämpfungsvorrichtung (14) jeweils auf dem ersten stützenden Montageteil (1110) und dem zweiten stützenden Montageteil (1108) montiert ist.

2. Waschmaschine nach Anspruch 1, wobei
die Montagedämpfungsvorrichtung (14) einen Hauptkörper aus einem elastischen weichen Material umfasst und ein erster Dämpfungshohlraum (1404), der zum Erlauben des Aufbaus der Waschmaschinenmontageplatte (12) verwendet wird, und ein zweiter Dämpfungshohlraum, der zum Erlauben des Aufbaus des verstärkten Verbindungselements (11) verwendet wird, in dem Hauptkörper angeordnet sind.

3. Waschmaschine nach Anspruch 2, wobei der Hauptkörper eine nutförmige Struktur annimmt,
eine Kerbe in einem Mittelteil der nutförmigen Struktur ausgebildet ist und die Kerbe auf die Waschmaschinenmontageplatte (12) geklemmt ist und
der erste Dämpfungshohlraum (1404) aus der Kerbe der nutförmigen Struktur ausgewählt ist.

4. Waschmaschine nach Anspruch 3, wobei ein Neigungswinkel an der Kerbe ausgebildet ist und eine Mehrzahl von konvexen Rippenpositionen (1407) an einer oberen Wand und einer unteren Wand entsprechend angeordnet sind.

5. Waschmaschine nach einem der Ansprüche 2 bis 4, wobei der erste Dämpfungshohlraum (1404) den Hauptkörper in einen ersten Dämpfungsteil (1401) und einen zweiten Dämpfungsteil (1402) unterteilt, die miteinander verbunden sind, und der zweite Dämpfungshohlraum in dem ersten Dämpfungsteil (1401) und/oder dem zweiten Dämpfungsteil (1402) ausgebildet ist.

6. Waschmaschine nach einem der Ansprüche 2 bis 5, wobei
der zweite Dämpfungshohlraum aus einem Hohlraum ausgewählt ist, der in dem inneren Teil des ersten Dämpfungsteils (1401) und/oder des zweiten Dämpfungsteils (1402) ausgebildet ist,
eine Öffnung in einer Seite ausgebildet ist, die dem ersten Dämpfungsteil (1401) und/oder dem zweiten Dämpfungsteil (1402) des Hohlraums zugewandt ist, und eine Richtung der Öffnung einer Richtung einer Öffnung des ersten Dämpfungshohlraums (1404) gegenüberliegt.

7. Waschmaschine nach einem der Ansprüche 2 bis 6, wobei
Klammern (1403), die zum Begrenzen und Fixieren des verstärkten Verbindungselements (11) verwendet werden, auf dem Hauptkörper angeordnet sind und die Klammern (1403) symmetrisch auf zwei Seiten des zweiten Dämpfungshohlraums angeordnet sind.

8. Waschmaschine nach einem der Ansprüche 1 bis 7, wobei
ein unterer Teil des verstärkten Verbindungselements (11) ein stützender Montageteil ist, der zum Montieren auf der Waschmaschinenmontageplatte (12) verwendet wird,
ein stützendes Montagebein (1109), das zum Positioniert- und Gestütztwerden auf der Waschmaschinenmontageplatte (12) verwendet wird, auf dem stützenden Montageteil angeordnet ist, und
die Montagedämpfungsvorrichtung (14) auf dem stützenden Montagebein (1109) angeordnet ist.

9. Waschmaschine nach einem der Ansprüche 7 oder 8, wobei mindestens zwei stützende Montagebeine (1109) auf jedem aus dem ersten stützenden Montageteil (1110) und dem zweiten stützenden Montageteil (1108) in der senkrechten Richtung des ersten stützenden Montageteils (1110) und des zweiten stützenden Montageteils (1108) angeordnet sind,
und die stützenden Montagebeine (1109) jeweils in den zwei zweiten Dämpfungshohlräumen angeordnet sind, und der erste stützende Montageteil (1110) und der zweite stützende Montageteil (1108) begrenzend zwischen den beiden Klammern (1403) angeordnet sind.

## Revendications

1. Machine à laver comprenant une plaque de montage (12) de machine à laver, une pompe de drainage à deux têtes et au moins un dispositif d'amortissement de montage (14),
la pompe de drainage à deux têtes comprenant deux pompes de drainage partageant une entrée d'eau (8), dans laquelle
les deux pompes de drainage sont reliées de manière solidaire l'une à l'autre par un élément de liaison renforcé (11), et l'élément de liaison renforcé (11) est monté sur la plaque de montage (12) de machine à laver, le dispositif d'amortissement de montage (14), utilisé pour atténuer les vibrations de la pompe de drainage à deux têtes, étant agencé entre l'élément de liaison renforcé (11) et la plaque de montage (12) de machine à laver, et l'élément de liaison renforcé (11) comprenant deux parties de montage décalées vers l'avant et vers l'arrière dans la direction axiale de la pompe de drainage à deux têtes,
les deux parties de montage sont utilisées pour monter respectivement les deux pompes de drainage, et des parties inférieures des deux parties de montage s'étendent vers le bas pour former respectivement une première partie de montage de support (1110) et une seconde partie de montage de support (1108), et le dispositif d'amortissement de montage (14) est monté respectivement sur la première partie de montage de support (1110) et la seconde partie de montage de support (1108).

2. Machine à laver selon la revendication 1, dans laquelle
le dispositif d'amortissement de montage (14) comprend un corps principal fabriqué en un matériau mou élastique,
et une première cavité d'amortissement (1404), utilisée pour permettre le montage de la plaque de montage de machine à laver (12), et une seconde cavité d'amortissement, utilisée pour permettre le montage de l'élément de liaison renforcé (11), sont agencées dans le corps principal.

3. Machine à laver selon la revendication 2, dans laquelle le corps principal présente une structure en forme de rainure,
une encoche est formée dans une partie centrale de la structure en forme de rainure et l'encoche serre la plaque de montage (12) de machine à laver, et
la première cavité d'amortissement (1404) est choisie parmi l'encoche de la structure en forme de rainure.

4. Machine à laver selon la revendication 3, dans laquelle un angle de chanfrein est formé sur l'encoche, et une pluralité d'emplacements de nervures convexes (1407) sont agencés de manière correspondante sur une paroi supérieure et une paroi inférieure de l'encoche.

5. Machine à laver selon une des revendications 2 à 4, dans laquelle
la première cavité d'amortissement (1404) divise le corps principal en une première partie d'amortissement (1401) et une seconde partie d'amortissement (1402), qui sont reliées entre elles, et la seconde cavité d'amortissement est formée dans la première partie d'amortissement (1401) et/ou la seconde partie d'amortissement (1402).

6. Machine à laver selon une des revendications 2 à 5, dans laquelle
la seconde cavité d'amortissement est choisie parmi une cavité creuse formée dans la partie intérieure de la première partie d'amortissement (1401) et/ou de la seconde partie d'amortissement (1402),
une ouverture est formée dans un côté, faisant face à la première partie d'amortissement (1401) et/ou à la seconde partie d'amortissement (1402), de la cavité, et la direction de l'ouverture est opposée à celle d'une ouverture de la première cavité d'amortissement (1404).

7. Machine à laver selon une des revendications 2 à 6, dans laquelle
des éléments de serrage (1403), utilisés pour limiter et fixer l'élément de liaison renforcé (11), sont agencés sur le corps principal, et les éléments de serrage (1403) sont agencés symétriquement sur deux côtés de la seconde cavité d'amortissement.

8. Machine à laver selon une des revendications 1 à 7, dans laquelle
une partie inférieure de l'élément de liaison renforcé (11) est une partie de montage de support utilisée pour être montée sur la plaque de montage (12) de machine à laver,
un pied de montage de support (1109) destiné à être positionné et supporté sur la plaque de montage (12) de machine à laver est agencé sur la partie de montage de support, et
le dispositif d'amortissement de montage (14) est agencé sur le pied de montage de support (1109).

9. Machine à laver selon une des revendications 7 ou 8, dans laquelle au moins deux pieds de montage de support (1109) sont agencés sur chacune de la première partie de montage de support (1110) et de la seconde partie de montage de support (1108) dans la direction perpendiculaire par rapport à la première partie de montage de support (1110) et à la seconde partie de montage de support (1108),
et les pieds de montage de support (1109) sont respectivement montés dans les deux secondes cavités d'amortissement, et la première partie de montage de support (1110) et la seconde partie de montage de support (1108) sont montées entre les deux éléments de serrage (1403) de manière à être limitées.
